# EUROPÄISCHE PATENTSCHRIFT

(11) **EP 4 109 125 B1**
(45) Veröffentlichungstag und Bekanntmachung des Hinweises auf die Patenterteilung: **05.11.2025**
(21) Anmeldenummer: 22179874.7
(22) Anmeldetag: 20.06.2022
(51) Int. Cl.: G01S 7/02, G01S 7/28, G01S 7/35, G01S 7/40, G01S 13/06, G01S 13/75, G01S 13/931, G01S 7/497

(54) **PRÜFVORRICHTUNG ZUM TEST EINES MIT ELEKTROMAGNETISCHEN WELLEN ARBEITENDEN ABSTANDSSENSORS UND VERFAHREN ZUR ÜBERPRÜFUNG EINES ABSTANDSSENSOR-PRÜFSTANDES MIT EINEM GEFALTETEN STRAHLENGANG**
TEST DEVICE FOR TESTING A DISTANCE SENSOR OPERATING WITH ELECTROMAGNETIC WAVES AND METHOD FOR CHECKING A DISTANCE SENSOR TEST OBJECT WITH A FOLDED BEAM PATH
DISPOSITIF D'ESSAI PERMETTANT DE METTRE À L'ESSAI UN CAPTEUR DE DISTANCE FONCTIONNANT SUR ONDES ÉLECTROMAGNÉTIQUES ET PROCÉDÉ D'ESSAI D'UN BANC D'ESSAI DU CAPTEUR DE DISTANCE À L'AIDE D'UNE TRAJECTOIRE ONDULÉE DE RAYONNEMENT

(30) Priorität: 22.06.2021 US 202117353905
(43) Veröffentlichungstag der Anmeldung: 28.12.2022
(73) Patentinhaber: dSPACE GmbH, 33102 Paderborn (DE)
(72) Erfinder: Paul, Jeffrey, CA 90501 Torrance (US)

(56) Entgegenhaltungen:
- WO-A1-2020/141151
- WO-A1-2020/165191
- DE-A1- 102019 106 632
- US-A- 4 521 780
- US-B1- 6 710 737

## Beschreibung

Die Erfindung betrifft eine Prüfvorrichtung zum Test eines mit elektromagnetischen Wellen arbeitenden Abstandssensors, mit einem Empfangselement zum Empfangen einer elektromagnetischen Freiraumwelle als Empfangssignal, mit einem Abstrahlelement zur Abstrahlung eines elektromagnetischen Ausgangssignals, wobei in einem Simulationsbetrieb das Empfangssignal oder ein von dem Empfangssignal abgeleitetes Empfangssignal über eine Zeitverzögerungseinheit mit einer vorgebbaren Zeitverzögerung geführt wird und so zu einem zeitverzögerten Signal als simuliertes Reflexionssignal zeitverzögert wird, wobei das zeitverzögerte Signal oder ein von dem zeitverzögerten Signal abgeleitetes zeitverzögertes Signal als Ausgangssignal über das Abstrahlelement abgestrahlt wird.

Die vorgenannten Prüfvorrichtungen zum Test von Abstandssensoren sind aus verschiedenen technischen Bereichen und Anwendungsfeldern bekannt, beispielsweise aus dem Bereich der Steuergeräteentwicklung und des Steuergerätetests, insbesondere im automotiven Bereich, hierzu wird beispielsweise verwiesen auf die WO 2020/165191 A1. Weitere Beispiele für Prüfvorrichtungen sind aus US 6 710 737 B1 und DE 10 2019 106632 A1 bekannt. Ein anderes Anwendungsfeld sind End-of-Line-Prüfstände, also Einrichtungen, die am Ende einer Fertigungslinie der Produktüberprüfung dienen, hier der Überprüfung von Abstandssensoren. Im vorliegenden Fall geht es um den Test von Abstandssensoren, die mit elektromagnetischen Wellen arbeiten. Im automotiven Bereich werden ganz überwiegend Radarsensoren eingesetzt. Grundsätzlich können aber auch Abstandssensoren getestet werden, die in einem anderen Frequenzbereich elektromagnetischer Wellen arbeiten, beispielsweise im Bereich des sichtbaren Lichts, oder die mit elektromagnetischen Strahlungsquellen arbeiten, die elektromagnetische Wellen mit einer langen Kohärenzlänge emittieren, wie beispielsweise bei Laseranwendungen (z. B. Lidar).

Mit den eingangs beschriebenen Prüfvorrichtungen ist es möglich, dem zu testenden Abstandssensor ein Objekt in praktisch beliebiger Entfernung vorzutäuschen. Abstandssensoren der hier betrachteten Art arbeiten grundsätzlich so, dass von ihnen emittierte elektromagnetische Wellen von einem Objekt im Abstrahlbereich des Abstandssensors reflektiert werden, der Abstandssensor empfängt die reflektierten elektromagnetischen Wellen und bestimmt aus der Laufzeit der elektromagnetischen Wellen den Abstand zu dem Objekt. Die Ermittlung der Signallaufzeit erfolgt häufig nicht direkt, sondern über geschickte Signalauswertungen, wie beispielsweise der Bestimmung einer Frequenzdifferenz beim Dauerstrichradar; darauf kommt es hier im Einzelnen jedoch nicht an.

Die eingangs beschriebene Prüfvorrichtung wird also zum Test des Abstandssensors in dessen Abstrahlbereich positioniert, die Prüfvorrichtung empfängt die von dem Abstandssensor emittierten Freiraumwellen und verzögert dieses Empfangssignal mit ihrer Zeitverzögerungseinheit gemäß einer vorgegebenen Zeitverzögerung und strahlt dann das zeitverzögerte Signal über ihr Abstrahlelement wieder in Richtung auf den zu testenden Abstandssensor ab, wodurch beim Abstandssensor der Eindruck eines gemäß der eingestellten Zeitverzögerung entfernten Objektes entsteht.

Wenn ein Abstandssensor eine elektromagnetische Welle in den Freiraum emittiert, dann werden die Wellenfronten der emittierten elektromagnetischen Wellen mit zunehmendem Abstand vom Abstandssensor immer ebener. Im einfachsten Fall handelt es sich um Kugelwellen, deren Krümmungsradien proportional zum Abstand von dem Abstandssensor zunehmen. Bei großen Abständen werden praktisch vollkommen ebene Wellenfronten erhalten.

Beim Test vieler Antennenanordnungen und auch beim Test der hier betrachteten Abstandssensoren kommt es bei der Simulation großer Objektabstände nicht nur darauf an, dass entsprechende Verzögerungszeiten eingehalten werden, vielmehr muss auch darauf geachtet werden, dass mit ebenen Wellenfronten gearbeitet wird, die charakteristisch für große Objektabstände sind. Viele Abstandssensoren arbeiten beispielsweise mit mehreren Empfangselementen, sodass die Ebenheit einer empfangenen Freiraumwelle überprüft werden kann. Werden dann beispielsweise von den Empfangselementen zwar Signale mit einer relativ hohen zeitlichen Verzögerung empfangen aber mit Phasendifferenzen zwischen den Empfangselementen, die nicht zu einer ebenen Freiraumwelle passen, dann kann dies zu falschen Testergebnissen führen oder unbeabsichtigt Fehlerzustände auslösen.

Im Stand der Technik ist es bekannt, zur Simulation großer Objektabstände mit Abstandssensor-Prüfständen zu arbeiten, die einen gefalteten Strahlengang aufweisen. Hier wird häufig mit einem parabolisch geformten Strahlumlenker gearbeitet, der sphärische Freiraumwellen in Freiraumwellen mit ebenen Wellenfronten umformt. Ein solcher Abstandssensor-Prüfstand weist dann eine Prüfvorrichtung der zuvor beschriebenen Art zum Test eines mit elektromagnetischen Wellen arbeitenden Abstandssensor auf, einen Strahlumlenker und eine Halte- und Positioniervorrichtung zur Aufnahme eines zu testenden Abstandssensors. Die Prüfvorrichtung weist wiederum ein Empfangselement, ein Abstrahlelement und eine Zeitverzögerungseinheit auf. Beim Test des Abstandssensors emittiert dieser eine elektromagnetische Freiraumwelle, die dann zunächst auf den Strahlumlenker trifft und nach Reflexion in Richtung auf die Prüfvorrichtung eine ebene Wellenfront aufweist. Durch die Umlenkung des Strahlengangs über den Strahlumlenker wird auch ein längerer Weg für die Freiraumwelle erhalten, jedoch ist dies nicht der wesentliche Effekt, der wesentliche Effekt liegt in der Formung einer ebenen Wellenfront. Die Signallaufzeit wird - wie zuvor beschrieben - über die Prüfvorrichtung hergestellt. Die Prüfvorrichtung empfängt die über den Strahlumlenker reflektierte Freiraumwelle, zeitverzögert sie und gibt sie in Richtung auf den Strahlumlenker wieder ab, wobei die Freiraumwelle auch wieder kugelförmig Wellenfronten aufweist, die nach Reflexion an dem Strahlumlenker in ebene Wellenfronten umgeformt werden. Das zeitverzögerte, simulierte Reflexionssignal gelangt dann wieder zu dem zu testenden Abstandssensor, der somit auf seine Funktionsfähigkeit hin überprüft werden kann. Derartige Anordnungen zur Fernfeld-Antennenmessung mit kompakten Antennenprüfständen werden auch als Compact Antenna Test Ranges (CATR) bezeichnet.

Die Komponenten solcher Abstandssensor-Prüfstände, also Prüfvorrichtung, Strahlumlenker und Halte- und Positioniervorrichtung für den zu testenden Abstandssensor, müssen exakt aufeinander ausgerichtet sein, schon geringe Abweichungen von der idealen Konfiguration können zu verfälschten und unbrauchbaren Messergebnissen führen. Maßgeblich ist die Frage, ob in dem unmittelbaren Messbereich vor dem zu testenden Abstandssensor, also in der sogenannten Ruhezone, die Ebenheit der Wellenfront gewährleistet ist, insbesondere exakt senkrecht zu der Ausbreitungsrichtung der zu empfangenden Freiraumwelle. Um dies festzustellen, werden Abstandssensor-Prüfstände regelmäßig auf ihre exakte Einstellung und Kalibrierungen hin untersucht. Dazu ist es im Regelfall erforderlich, die Prüfvorrichtung - also den Abstandssimulator - durch einen aktiven Sender zu ersetzen, der ein geeignetes Testsignal generieren kann. Gleichzeitig muss an den Ort des sonst zu testenden Abstandssensors eine entsprechende Messvorrichtung verbracht werden, mit der die Wellenfront in der Ruhezone des sonst installierten Abstandssensors vermessen werden kann, also durch Erfassung von Amplitude und/oder Phase der einlaufenden Freiraumwelle. Diese Vorgehensweise ist extrem aufwendig und kostenintensiv.

Aufgabe der vorliegenden Erfindung ist es daher, ein gerätetechnisches und verfahrensmäßiges Konzept zu entwickeln, mit denen sich ein Abstandssensor-Prüfstand mit relativ geringem technischem und kostenmäßigem Aufwand überprüfen lässt.

Die zuvor hergeleitete Aufgabe ist bei der eingangs beschriebenen Prüfvorrichtung zum Test eines mit elektromagnetischen Wellen arbeitenden Abstandssensors zunächst dadurch gelöst, dass mit einer Testsignaleinheit in einem Testbetrieb ein Testsignal erzeugt wird und das Testsignal oder ein von dem Testsignal abgeleitetes Testsignal als Ausgangssignal über das Abstrahlelement abgestrahlt wird, wobei eine Auswerteeinheit im Testbetrieb synchron zur Abstrahlung des Testsignals oder des abgeleiteten Testsignals als Ausgangssignal das Empfangssignal oder das abgeleitete Empfangssignal hinsichtlich seiner Phasenlage und/oder Amplitude auswertet und den ermittelten Wert für die Phasenlage und/oder die Amplitude speichert. Durch die Realisierung der Testsignaleinheit ist es möglich, im Bedarfsfall ein Testsignal zu erzeugen und über das Abstrahlelement in den Außenraum abzustrahlen. Bei den Prüfvorrichtungen, von denen die Erfindung ausgeht, ist dies nicht möglich, da sie lediglich zuvor empfangene Signale entsprechend zeitverzögert wieder abstrahlen. Durch die aufgezeigten Maßnahmen ist es möglich, die Prüfvorrichtung zum Test eines Abstandssensor-Prüfstandes in ihrer verbauten Position zu belassen, die Prüfvorrichtung muss also nicht mehr durch einen speziellen Sender ersetzt werden.

Die Idee besteht nun darin, dass das ausgesendete Testsignal oder das von dem Testsignal abgeleitete Testsignal in der Anordnung des Abstandssensor-Prüfstandes reflektiert und von der Prüfvorrichtung wieder empfangen wird. Das dann von der Prüfvorrichtung empfangene Empfangssignal entspricht also dem ausgesendeten und reflektierten Testsignal im Testbetrieb. Dieses Empfangssignal oder das davon abgeleitete Empfangssignal kann dann von der Auswerteeinheit hinsichtlich seiner Phasenlage und/oder hinsichtlich seiner Amplitude ausgewertet werden. Die Auswertung erfolgt üblicherweise in Bezug auf ein Referenzsignal. Dies kann beispielsweise das ausgesendete Testsignal sein.

Bei Abstandssensor-Prüfständen mit einem gefalteten Strahlengang sind die Prüfvorrichtung und der zu testende Abstandssensor (oder die auszumessende Antenne) oft beabstandet voneinander angeordnet, sodass sich insgesamt ein V-förmiger Strahlengang ergibt. Erfindungsgemäß zeichnet sich die Prüfvorrichtung vorteilhaft dadurch aus, dass die Zeitverzögerungseinheit, die Testsignaleinheit und die Auswerteeinheit von einem Gehäuse umgeben sind und das Empfangselement über eine Signalleitung mit dem Gehäuse verbunden ist und damit entfernt vom Gehäuse der Prüfvorrichtung positionierbar ist. Wenn es heißt, dass das Empfangselement über eine Signalleitung mit dem Gehäuse verbunden ist, dann ist damit selbstverständlich eine Verbindung gemeint, die eine Übertragung des Empfangssignals oder eines von dem Empfangssignal abgeleiteten Signals in das Innere des Gehäuses zwecks weiterer elektronischer Signalverarbeitung ermöglicht.

Erfindungsgemäß istes möglich, das Empfangselement an die Montageposition des zu überprüfenden Abstandssensors zu bringen, sodass die Ebenheit der elektromagnetischen Wellen am Testort des Abstandssensors überprüft werden kann, und war einzig und allein mit der Prüfvorrichtung. Die Prüfvorrichtung selbst muss dabei keine Analyse der Ebenheit der elektromagnetischen Wellen vornehmen, wesentlich ist, dass das Empfangssignal oder das abgeleitete Empfangssignal hinsichtlich seiner Phasenlage und/oder hinsichtlich seiner Amplitude ausgewertet wird und entsprechende Messwerte in der Prüfvorrichtung vorgehalten werden, sei es, um eine weitere Auswertung tatsächlich in der Prüfvorrichtung selbst vorzunehmen oder sei es, um die Messwerte über eine entsprechende Schnittstelle beispielsweise an einen externen Rechner zu übertragen zur dortigen Auswertung der Ebenheit der empfangenen Wellen.

Eine weitere bevorzugte Ausgestaltung der Prüfvorrichtung sieht vor, dass das Empfangselement einen Mischer aufweist und das Empfangssignal mit dem Mischer in eine niedrigere Zwischenfrequenz runtergemischt wird. Das so aus dem Empfangssignal abgeleitete niederfrequente Empfangssignal wird über das Signalkabel zumindest zu der von dem Gehäuse umgebenen Auswerteeinheit übertragen. Anhand dieses Beispiels wird deutlich, weshalb begrifflich unterschieden wird zwischen dem Empfangssignal und dem von dem Empfangssignal abgeleiteten Empfangssignal. Das Empfangssignal an sich geht zurück auf die von dem Empfangselement aufgenommene Freiraumwelle. Erfolgt eine weitere Signalverarbeitung, bevor das empfangene Signal an eine der weiteren Verarbeitungseinheiten, also Zeitverzögerungseinheiten oder Auswerteeinheit, weitergeleitet wird, dann handelt es sich in Strenge nicht mehr um das Empfangssignal selbst, sondern um ein davon abgeleitetes Empfangssignal. Dies ist bei dem zuvor genannten Ausführungsbeispiel der Fall, bei dem das Empfangssignal auf eine niedrigere Zwischenfrequenz heruntergemischt wird. Der Vorteil des Heruntermischens auf eine niedrigere Zwischenfrequenz besteht darin, dass die Übertragung dieser niederfrequenteren Signale keine so hohen Anforderungen an den Übertragungsweg von dem Empfangselement über die Signalleitung an die weiteren elektronischen Einheiten in dem Gehäuse der Prüfvorrichtung stellt.

Mit dieser Erläuterung erklärt sich auch die Unterscheidung zwischen dem von der Testsignaleinheit erzeugten Testsignal und einem davon möglicherweise abgeleiteten Testsignal, das dann als Ausgangssignal abgestrahlt wird. Hier könnte also entsprechend vorgesehen sein, dass das Testsignal mit einerrelativ niedrigen Frequenz - entsprechend der heruntergemischten Zwischenfrequenz - erzeugt wird und vor dem Abstrahlen über das Abstrahlelement mit einem Mischer hochgemischt wird.

Wie schon erwähnt, bestimmt die Auswerteeinheit die Phasenlage des Empfangssignals oder die Phasenlage des abgeleiteten Empfangssignals vorzugsweise in Bezug auf ein Referenzsignal, wobei das Referenzsignal insbesondere das Testsignal oder das abgeleitete Testsignal ist.

Bei einer vorteilhaften Ausgestaltung der Prüfvorrichtung ist vorgesehen, dass die Auswerteeinheit das Empfangssignal oder das von dem Empfangssignal abgeleitete Empfangssignal hinsichtlich seiner Phasenlage durch Laufzeitmessung bezüglich des als Ausgangssignal abgestrahlten Testsignals oder des als Ausgangssignal abgestrahlten abgeleiteten Testsignals auswertet. Es sind verschiedene Verfahren bekannt, wie durch geschickte Auswertung des ausgesendeten Signals und des auf das ausgesendete Signal zurückgehenden reflektierten Empfangssignals eine Laufzeitinformation erhalten werden kann, beispielsweise indem als Testsignal ein frequenzmoduliertes Signal verwendet wird (chirp-signal) und Sendesignal und Empfangssignal miteinander gemischt werden, sodass aus der dann ermittelten Frequenzdifferenz einfach eine Laufzeitinformation gewonnen werden kann.

Insbesondere ist vorgesehen, dass das Testsignal oder das abgeleitete Testsignal ein Impuls, eine Impulsfolge, ein Dauerstrichsignal oder ein frequenzmoduliertes Dauerstrichsignal ist.

Eine vorteilhafte Weiterbildung der Prüfvorrichtung zeichnet sich dadurch aus, dass die Auswerteeinheit eine Mehrzahl von Empfangssignalen oder eine Mehrzahl von abgeleiteten Empfangssignalen hinsichtlich der Phasenlage und/oder hinsichtlich der Amplitude auswertet und eine Mehrzahl von Werten für die Phasenlage und/oder die Amplitude speichert. Die Mehrzahl an Werten für die Phasenlage und/oder die Amplitude resultiert im tatsächlichen Messvorgang daher, dass die Position des Empfangselements im Testbetrieb der Einbauposition des zu testenden Abstandssensors entspricht und diese Position variiert wird. So kann die Ruhezone des üblicherweise zu testenden Abstandssensors durch ortsmäßige Variation einer oder auch zweier Ortsvariablen linear oder flächig abgerastert und vermessen werden. Die Abweichungen der erfassten Phasenlagen und/oder Amplituden von Messpunkt zu Messpunkt sind ein Maß für die Ebenheit der einlaufenden Wellen in der Ruhezone. Die Abweichungen erlauben Rückschluss darüber, ob der zu überprüfende Abstandssensor-Prüfstand noch den Genauigkeitsanforderungen entspricht oder nachkalibriert werden muss. Die Auswertung der erfassten Phasenlagen und/oder Amplituden auf eine Wellenebenheit hin kann in der Prüfvorrichtung erfolgen, muss hier aber nicht erfolgen.

Bei einer vorteilhaften Ausgestaltung weist die Prüfvorrichtung eine Kommunikationsschnittstelle auf, über die ein externer Rechner mit der Prüfvorrichtung verbindbar ist. Die Prüfvorrichtung, insbesondere die Auswerteeinheit der Prüfvorrichtung, überträgt dann mindestens einen Wert für die Phasenlage und/oder für die Amplitude des Empfangssignals oder des abgeleiteten Empfangssignals über diese Kommunikationsschnittstelle zu dem externen Rechner. Hier kann dann eine Auswertung der Phasenlagen und/oder der Amplituden des Empfangssignals vorgenommen werden und Rückschlüsse auf die Wellenebenheit und auch auf die Ausrichtung der verschiedenen Komponenten des Abstandssensor-Prüfstandes gezogen werden.

Bei einer vorteilhaften Weiterbildung der zuvor genannten Ausgestaltung ist vorgesehen, dass die Prüfvorrichtung nach einer über die Kommunikationsschnittstelle erhaltenen externen Aufforderung das Testsignal erzeugt und das Testsignal oder ein von dem Testsignal abgeleitetes Testsignal als Ausgangssignal über das Abstrahlelement abstrahlt und synchron zur Abstrahlung des Ausgangssignals das Empfangssignal oder das abgeleitete Empfangssignal hinsichtlich seiner Phasenlage und/oder hinsichtlich seiner Amplitude auswertet.

Aus den zuvor gemachten Ausführungen zur Prüfvorrichtung ergibt sich, dass die eingangs hergeleitete Aufgabe auch gelöst wird durch ein Verfahren zur Überprüfung eines Abstandssensor-Prüfstandes mit einem gefalteten Strahlengang, wobei der Abstandssensor-Prüfstand eine Prüfvorrichtung zum Test eines mit elektromagnetischen Wellen arbeitenden Abstandssensors, einen Strahlumlenker und eine Halte- und Positioniervorrichtung zur Aufnahme eines zu testenden Abstandssensors in einer Halterung umfasst. Die Prüfvorrichtung umfasst ein Empfangselement, ein Abstrahlelement, eine Zeitverzögerungseinheit, eine Testsignaleinheit und eine Auswerteeinheit, wobei das Empfangselement zum Empfangen einer elektromagnetischen Freiraumwelle als Empfangssignal dient und wobei das Abstrahlelement zur Abstrahlung eines elektromagnetischen Ausgangssignals dient. Im bekannten Simulationsbetrieb wird das Empfangssignal oder ein von dem Empfangssignal abgeleitetes Empfangssignal bei Überprüfung des Abstandssensors über die Zeitverzögerungseinheit mit einer vorgebbaren Zeitverzögerung geführt wird und so zu einem zeitverzögerten Signal als simuliertes Reflexionssignal zeitverzögert. Das zeitverzögerte Signal oder ein von dem zeitverzögerten Signal abgeleitetes Signal wird zum Test des Abstandssensors als Ausgangssignal über das Abstrahlelement abgestrahlt.

Mit der Testsignaleinheit wird in einem Testbetrieb ein Testsignal erzeugt und das Testsignal oder ein von dem Testsignal abgeleitetes Testsignal wird als Ausgangssignal über das Abstrahlelement abgestrahlt. Die Auswerteeinheit wertet im Testbetrieb synchron zur Abstrahlung des Testsignals oder des abgeleiteten Testsignals als Ausgangssignal das Empfangssignal oder das abgeleitete Empfangssignal hinsichtlich seiner Phasenlage und/oder seiner Amplitude aus. Der ermittelte Wert für die Phasenlage und/oder die Amplitude wird gespeichert.

Erfindungsgemäß ist ferner gerätetechnisch vorgesehen, dass die Zeitverzögerungseinheit, die Testsignaleinheit und die Auswerteeinheit von einem Gehäuse umgeben sind, wobei das Gehäuse in dem Abstandssensor-Prüfstand ortsfest angeordnet ist. Das Empfangselement der Prüfvorrichtung ist über eine Signalleitung mit dem Gehäuse verbunden und ist damit entfernt vom Gehäuse der Prüfvorrichtung positionierbar.

Zur Überprüfung des Abstandssensor-Prüfstandes wird erfindungsgemäß das Empfangselement der Prüfvorrichtung in die Halterung der Halte- und Positioniervorrichtung verbracht, wobei entlang einer Achse oder in einer Ebene vor dem Empfangselement in der Halterung der Halte- und Positioniervorrichtung mittels der Positioniervorrichtung mehrere Testpositionen angefahren werden. In mehreren Testpositionen wird jeweils mindestens ein Testbetrieb durchgeführt und es werden daher mehrere Phasenlagen und/oder Amplituden ermittelt und die ermittelten Werte für die Phasenlage und/oder die Amplitude werden gespeichert, insbesondere zusammen mit der Ortskoordinate oder den Ortskoordinaten der angefahrenen Testpositionen. Die Achse bzw. die Ebene, in der die angefahrenen Testpositionen vor dem Empfangselement liegen, verlaufen idealerweise senkrecht zur erwarteten Fortbewegungsrichtung der einlaufenden Welle. Anhand der ermittelten Phasenlagen und/oder Amplituden in verschiedenen Testpositionen kann auf die Ebenheit der Welle in der Ruhezone vor dem eigentlich zu testenden Abstandssensor geschlossen werden. Die Ermittlung der Ebenheit der Welle kann dabei in der Prüfvorrichtung selbst erfolgen, die erfassten Daten können aber auch über eine Schnittstelle an einen externen Rechner übertragen und dort ausgewertet werden.

Im Einzelnen gibt es nun eine Vielzahl von Möglichkeiten, die beschriebene Prüfvorrichtung und das beschriebene Verfahren gemäß den unabhängigen Patentansprüchen weiterzubilden und auszugestalten. Dies ist im Zusammenhang mit der Zeichnung in den folgenden Figuren dargestellt. In der Zeichnung zeigen
- Fig. 1a, 1b: schematisch einen Abstandssensor-Prüfstand mit einem gefalteten Strahlengang wie aus dem Stand der Technik bekannt,
- Fig. 2: schematisch eine Prüfvorrichtung zum Test eines mit elektromagnetischen Wellen arbeitenden Abstandssensors mit einer Testsignaleinheit und einer Auswerteeinheit,
- Fig. 3: schematisch eine Prüfvorrichtung wie in Fig. 2 mit zusätzlichen Mischern,
- Fig. 4: schematisch eine Prüfvorrichtung zum Test eines mit elektromagnetischen Wellen arbeitenden Abstandssensors mit einem Empfangselement, das über eine Signalleitung mit einem Gehäuse der Prüfvorrichtung verbunden ist,
- Fig. 5: schematisch eine weitere Prüfvorrichtung, bei der sowohl das Empfangselement wie auch das Abstrahlelement eine Signalleitung mit dem Gehäuse der Prüfvorrichtung verbunden sind und
- Fig. 6: schematisch eine Prüfvorrichtung innerhalb eines Abstandssensor-Prüfstandes mit einem gefalteten Strahlengang und ein Verfahren zur Überprüfung des Abstandssensor-Prüfstandes.

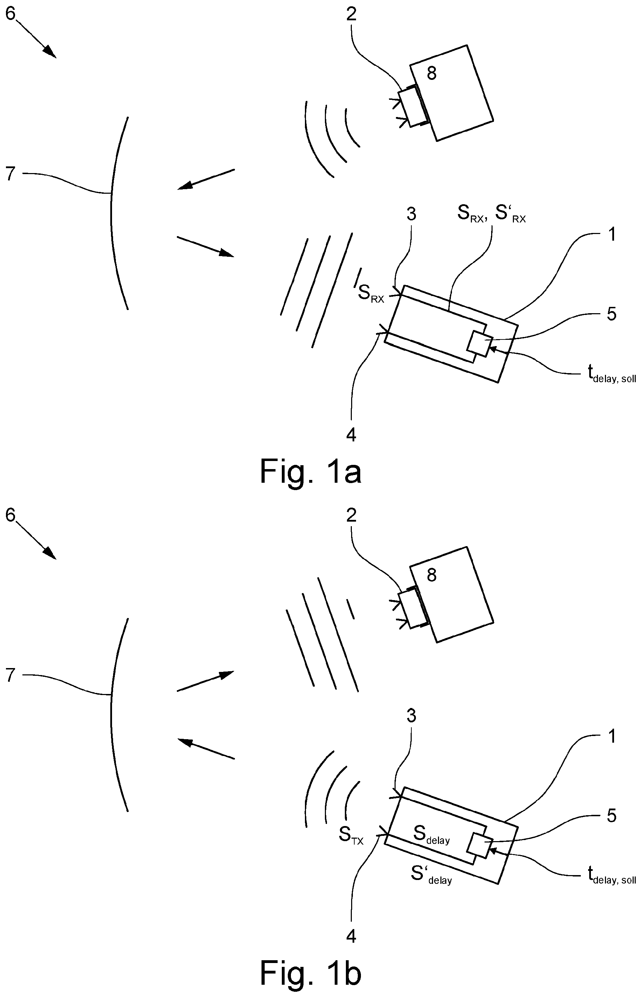

Alle Figuren zeigen eine Prüfvorrichtung 1 zum Test eines mit elektromagnetischen Wellen arbeitenden Abstandssensors 2, wobei in den Fig. 1a, 1b aus dem Stand der Technik bekannte Prüfvorrichtungen 1 dargestellt sind. Alle Prüfvorrichtungen 1 dienen in ihrer Grundfunktion, die in einem Simulationsbetrieb besteht, der Simulation eines von dem Abstandssensor 2 beabstandeten Objektes, wobei dieses beabstandete Objekt gegenüber einem zu testenden Abstandssensor 2 simuliert wird.

Die dargestellten Prüfvorrichtungen 1 weisen sämtlich ein Empfangselement 3 zum Empfangen einer elektromagnetischen Freiraumwelle als Empfangssignal S_{RX} auf, ein Abstrahlelement 4 zur Abstrahlung eines elektromagnetischen Ausgangssignals S_{TX}, wobei in einem Simulationsbetrieb das Empfangssignal S_{RX} oder ein von dem Empfangssignal S_{RX} abgeleitetes Empfangssignal S'_{RX} über eine Zeitverzögerungseinheit 5 mit einer vorgebbaren Zeitverzögerung t_{delay, soll} geführt wird und so zu einem zeitverzögerten Signal S_{delay} als simuliertes Reflexionssignal zeitverzögert wird. Das zeitverzögerte Signal S_{delay} oder ein von dem zeitverzögerten Signal S_{delay} abgeleitetes zeitverzögertes Signal S'_{delay} wird dann als Ausgangssignal S_{TX} über das Abstrahlelement 4 abgestrahlt.

In den Fig. 1a, 1b ist die Verwendung einer solchen Prüfvorrichtung 1, wie sie auch im Stand der Technik bekannt ist, dargestellt. Hier ist die Prüfvorrichtung 1 Bestandteil eines Abstandssensor-Prüfstandes 6 mit einem gefalteten Strahlengang. In dem Abstandssensor-Prüfstand 6 ist die Prüfvorrichtung 1 zum Test eines mit elektromagnetischen Wellen arbeitenden Abstandssensors 2 zusammen positioniert mit einem Strahlumlenker 7 und einer Halte- und Positioniervorrichtung 8 zur Aufnahme eines zu testenden Abstandssensors 2. In Fig. 1a ist zu erkennen, dass der - beispielsweise im Rahmen eines End-of-Line-Tests - zu testende Abstandssensor 2 eine elektromagnetische Welle emittiert, die eine gekrümmte Wellenfront hat. Der Strahlumlenker 7 ist parabolisch geformt und dient der Formung der reflektierten Wellen in Wellen mit einer ebenen Wellenfront. Dies ist symbolisch dargestellt durch die gekrümmten und parallelen Linien.

Die Prüfvorrichtung 1 dient im Simulationsbetrieb des Abstandssensor-Prüfstandes 6 zur Simulation eines beliebig beabstandeten Objektes im Erfassungsbereich des zu testenden Abstandssensors 2. Über das Empfangselement 3 empfängt die Prüfvorrichtung 2 die von dem Abstandssensor 2 emittierte Freiraumwelle S_{RX} und leitet das Empfangssignal S_{RX} oder ein von dem Empfangssignal S_{RX} abgeleitetes Empfangssignal S'_{RX} der Zeitverzögerungseinheit 5 zu. Der Zeitverzögerungseinheit 5 ist eine Zeitverzögerung t_{delay, soll} vorgebbar und die Zeitverzögerungseinheit 5 verzögert dann das Empfangssignal S_{RX} oder das abgeleitete Empfangssignal S'_{RX} entsprechend der vorgegebenen Zeitverzögerung t_{delay, soll} zu einem zeitverzögerten Signal S_{delay}. Dieses zeitverzögerte Signal S_{delay} oder ein von dem zeitverzögerten Signal S_{delay} abgeleitetes zeitverzögertes Signal S'_{delay} wird dann als Ausgangssignal S_{TX} über das Abstrahlelement 4 wieder abgestrahlt in Richtung auf den Strahlumlenker 7, was in Fig. 1b dargestellt ist. Von Bedeutung ist hier, dass die Prüfvorrichtung 1 das Ausgangssignal S_{TX} auch wieder als Freiraumwelle mit gekrümmter Wellenfront abstrahlt. Der Strahlumlenker 7 sorgt dann wiederum dafür, dass die von ihm reflektierte Freiraumwelle nach der Reflexion wieder eine ebene Wellenfront aufweist, was in dieser Richtung von besonderer Wichtigkeit ist.

Wie eingangs schon ausgeführt worden ist, kommt es bei der Simulation von großen Objektabständen nicht nur auf eine entsprechende Zeitverzögerung des simulierten Reflexionssignals durch die Zeitverzögerungseinheit 5 an, vielmehr ist es auch wichtig, dass die Wellenfront des simulierten Reflexionssignals eben ist, was für Fernfelder aus rein geometrischen Gründen charakteristisch ist. Insbesondere bei Abstandssensoren 2, die über mehrere Empfangselemente 3 verfügen, kann die Phasenlage Phi von empfangenen Wellen benachbarter Empfangselemente 3 ausgewertet werden. Wenn hier Phasenlagenabweichungen detektiert werden, die zur Zeitverzögerung des Reflexionssignals (und damit zu dem mittels der Zeitverzögerung bestimmten Objektabstand) nicht passen, kann dies beim zu testenden Abstandssensor 2 zu Fehlinterpretation oder gar zu Fehlerzuständen führen, weshalb die Einrichtung einer ebenen Wellenfront durch den Strahlumlenker 7 speziell in dieser Ausbreitungsrichtung essenziell ist.

Schon geringe Abweichungen der verschiedenen Elemente des dargestellten Abstandssensor-Prüfstandes 6 zueinander können dazu führen, dass im unmittelbaren Messbereich vor dem zu testenden Abstandssensor 2, also in der sogenannten Ruhezone, schon keine ebenen Wellenfronten mehr vorliegen, die Wellenfronten an sich gekrümmt sind oder auch schräg einlaufen.

Um die korrekte Funktionsweise des dargestellten Abstandssensor-Prüfstandes 6 sicherzustellen, wird in zeitlichen Abständen die Kalibrierung des Abstandssensor-Prüfstandes 6 immer wieder überprüft. Dazu werden im Regelfall sowohl die Prüfvorrichtung 1 wie auch der Abstandssensor 2 aus ihrer jeweiligen Montageposition entfernt und durch eine entsprechende Testvorrichtung ersetzt. Diese umfasst einen Sender an der Montageposition der Prüfvorrichtung 1 und einen entsprechenden Empfänger in der Montageposition des sonst zu testenden Abstandssensors 2. Der Empfänger kann dann über die Halte- und Positioniervorrichtung 8 in einer Messebene im Wesentlichen senkrecht zur gewünschten oder erwarteten Einlaufrichtung der elektromagnetischen Freiraumwelle verfahren werden und es werden dann von dem Empfänger die Phasenlage und häufig auch die Amplitude der einlaufenden Freiraumwelle an verschiedenen Positionen erfasst, sodass die Ebenheit der einlaufenden Freiraumwelle bewertet werden kann. Entspricht die Ebenheit der einlaufenden elektromagnetischen Wellen in der Ruhezone des Empfängers nicht den Anforderungen, muss die Positionierung der verschiedenen Elemente des Abstandssensor-Prüfstandes 6 überarbeitet werden.

Die zuvor beschriebene Prüfung auf eine ebene Wellenfront in der Ruhezone vor der Einbauposition des zu überprüfenden Abstandssensors 2, der sich im Simulationsbetrieb in der Halte- und Positioniervorrichtung 8 befindet, ist sehr aufwendig und auch kostenintensiv.

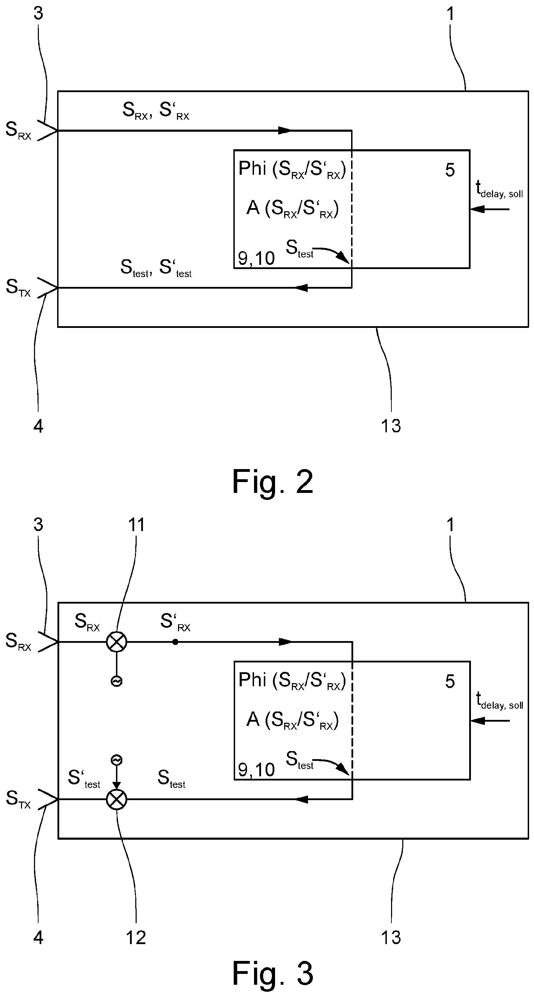

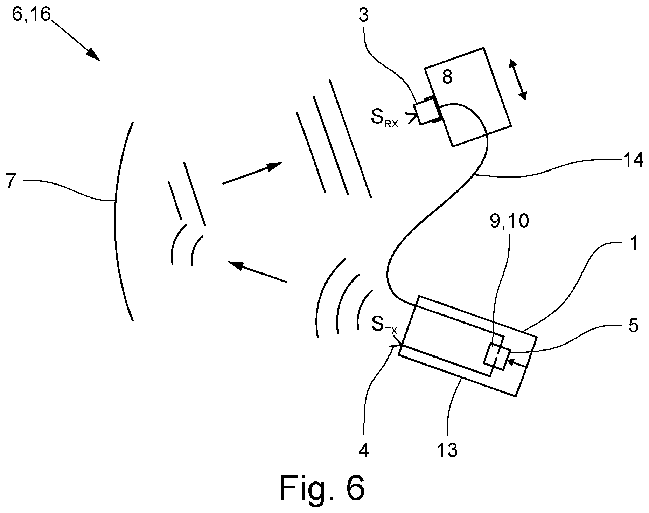

Die in den Fig. 2 bis 6 dargestellten Prüfvorrichtungen 1 ermöglichen es, den Abstandssensor-Prüfstand 6, wie er in den Fig. 1 und 6 dargestellt ist, seinerseits zu überprüfen, nämlich daraufhin zu überprüfen, ob die in der Ruhezone vor der Einbauposition des zu überprüfenden Abstandssensors 2 einlaufenden Wellen eine ebene Phasenfront haben. Der Abstandssensor-Prüfstand 6 muss also nicht mehr gänzlich umgerüstet werden bei Verwendung der nachfolgend beschriebenen Prüfvorrichtung 1, es reicht vielmehr ein geringfügiger Umbau des Abstandssensor-Prüfstandes 6.

In den Fig. 2 bis 5 ist jeweils nur eine geeignet ausgestaltete Prüfvorrichtung 1 dargestellt mit einer erweiterten Funktionalität, die die zuvor geschilderte Überprüfung der Kalibrierung des Abstandssensor-Prüfstandes 6 ermöglicht. Die Prüfvorrichtung 1 ist jeweils dadurch ausgezeichnet, dass sie neben der schon bekannten Zeitverzögerungseinheit 5 auch eine Testsignaleinheit 9 aufweist, die in einem Testbetrieb ein Testsignal Sₜₑₛₜ erzeugt, wobei das Testsignal Sₜₑₛₜ oder ein von dem Testsignal Sₜₑₛₜ abgeleitetes Testsignal S'ₜₑₛ als Ausgangssignal S_{TX} über das Abstrahlelement 4 abgestrahlt wird.

Durch diese Maßnahme ist es der Prüfvorrichtung 1 grundsätzlich möglich, unabhängig davon, ob sie über ihr Empfangselement 3 ein Empfangssignal S_{RX} empfängt, ein Testsignal Sₜₑₛₜ über ihr Abstrahlelement 4 abzustrahlen, das dann dazu genutzt werden kann, den Raum vor dem sonst zu testenden Abstandssensor 2 mit einem für eine Messung der Wellenebenheit geeigneten Testsignal zu beaufschlagen. Synchron zur Abstrahlung des Testsignals Sₜₑₛₜ oder des abgeleiteten Testsignals S'ₜₑₛₜ als Ausgangssignal S_{TX} wertet eine Auswerteeinheit 10 im Testbetrieb das synchron empfangene Empfangssignal S_{RX} oder das abgeleitete Empfangssignal S'_{RX} hinsichtlich seiner Phasenlage Phi und/oder hinsichtlich seiner Amplitude A aus. Dies soll in den Figuren durch die Schreibweise Phi(S_{RX}/S'_{RX}) und A(S_{RX}/S'_{RX}) zum Ausdruck gebracht werden, der Schrägstrich ist hier also keineswegs als Bruchstrich, sondern als eine Alternative aufzeigendes Trennzeichen zu verstehen. Der ermittelte Wert für die Phasenlage Phi und/oder die Amplitude A wird dann gespeichert. Diese Ausgestaltung der Prüfvorrichtung 1 bietet grundsätzlich die Möglichkeit, ein Testsignal Sₜₑₛₜ aktiv zu erzeugen (und nicht nur auf ein zuvor gemessenes Signal zurückzugreifen) und ein daraus resultierendes Empfangssignal S_{RX} dann hinsichtlich seiner Phasenlage Phi und/oder hinsichtlich seiner Amplitude A auszuwerten, was für die Ermittlung der Ebenheit der einlaufenden Freiraumwelle wesentlich ist.

In den Fig. 2 bis 6 sind die verschiedenen elektronischen Einheiten, also die Zeitverzögerungseinheit 5, die Testsignaleinheit 9 und die Auswerteeinheit 10, schematisch innerhalb eines Kästchens angeordnet, das rein funktional zu verstehen ist. Von Bedeutung ist hier lediglich, dass von der Zeitverzögerungseinheit 5 und der Auswerteinheit 10 jeweils das Empfangssignal S_{RX} oder das von dem Empfangssignal S_{RX} abgeleitete Empfangssignal S'_{RX} empfangen werden kann, und dass es der Zeitverzögerungseinheit 5 und der Testsignaleinheit 9 möglich ist, entsprechend auf die Signalleitung, die in Verbindung mit dem Abstrahlelement 4 steht, zuzugreifen, um entsprechende Signale auszugeben. Ob die verschiedenen Einheiten in einer gemeinsamen Baueinheit, beispielsweise auf einem gemeinsamen Field Programmable Gate Array (FPGA) realisiert sind, in mehreren bautechnischen und funktionalen Einheiten (zum Beispiel mehrere FPGAs oder mehrere Signalprozessoren) realisiert sind, teilweise analog und teilweise digital oder vollständig digital realisiert sind, hat für die der hier vorgestellten Prüfvorrichtung 1 keine besondere Bedeutung.

In Fig. 3 ist exemplarisch dargestellt, was damit gemeint ist, wenn davon die Rede ist, dass das Empfangssignal S_{RX} oder ein von dem Empfangssignal abgeleitetes Empfangssignal S'_{RX} der Zeitverzögerungseinheit 5 zugeleitet wird. Es ist gezeigt, dass das als Freiraumwelle über das Empfangselement 3 empfangene Empfangssignal S_{RX} mittels eines Eingangsmischers 11 auf eine niedrigere Zwischenfrequenz heruntergemischt wird und insoweit also nicht das ursprünglich empfangene Empfangssignal S_{RX}, sondern das durch Heruntermischen abgeleitete Empfangssignal S'_{RX} der Zeitverzögerungseinheit 5 bzw. der Auswerteeinheit 10 zugeleitet wird. Entsprechendes gilt auch für das zeitverzögerte Signal S_{delay} bzw. das durch Heraufmischen von dem zeitverzögerten Signal S_{delay} abgeleitete zeitverzögerte Signal S'_{delay} bzw. für das von der Auswerteeinheit 10 erzeugte Testsignal Sₜₑₛₜ oder für das durch Heraufmischen mit einem Ausgangsmischer 12 erhaltene abgeleitete Testsignal S'ₜₑₛₜ, das dann als Ausgangssignal S_{TX} abgestrahlt wird. Der Vorteil dieser speziellen Realisierungen liegt darin, dass die Anforderungen an die Geschwindigkeit der Signalverarbeitung in der Zeitverzögerungseinheit 5, der Testsignaleinheit 9 und der Auswerteeinheit 10 geringer sind, als wenn beispielsweise das Empfangssignal S_{RX} unmittelbar verarbeitet werden müsste bzw. unmittelbar entsprechende hochfrequente zeitverzögerte Signale S_{delay} oder Testsignale Sₜₑₛₜ erzeugt werden müssten.

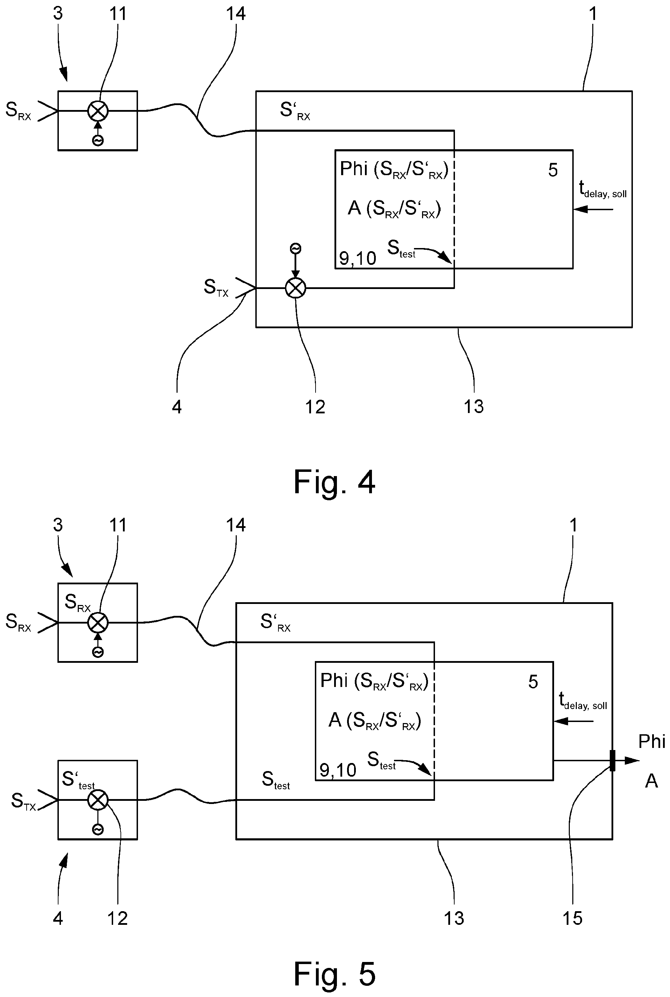

Bei den Ausführungsbeispielen gemäß den Fig. 2 bis 6 sind die Zeitverzögerungseinheit 5, die Testsignaleinheit 9 und die Auswerteeinheit 10 von einem Gehäuse 13 umgeben. In den Fig. 4 bis 6 ist das Empfangselement 3 über eine Signalleitung 14 mit dem Gehäuse verbunden, womit das Empfangselement 3 entfernt vom Gehäuse 13 der Prüfvorrichtung 1 positionierbar ist. Dies hat den Vorteil, dass das Empfangselement 3 sehr einfach an die Position in dem Abstandssensor-Prüfstand 6 verbracht werden kann, in der sich üblicherweise, also im normalen Simulationsbetrieb, der zu testende Abstandssensor 2 befindet, also in einer Halterung der Halte- und Positioniervorrichtung 8, wie dies in Fig. 6 dargestellt ist.

In den dargestellten Ausführungsbeispielen gemäß den Figuren 2 bis 6 bestimmt die Auswerteeinheit 10 die Phasenlage Phi des Empfangssignals S_{RX} oder die Phasenlage Phi des abgeleiteten Empfangssignals S'_{RX} in Bezug auf ein Referenzsignal, das jeweils das Testsignal Sₜₑₛₜ oder das abgeleitete Testsignal S'ₜₑₛₜ ist. Gemäß der zuvor eingeführten und erläuterten Schreibweise ist die Phasenlage Phi dann also eine Funktion des Sende- und des Empfangssignals, also Phi(S_{RX}/S'_{RX}, Sₜₑₛₜ/S'ₜₑₛₜ).

Die in den verschiedenen Ausführungsbeispielen dargestellten Testsignaleinheiten 9 erzeugen verschiedene Testsignale Sₜₑₛₜ, nämlich in Form eines Impulses, einer Impulsfolge, eines Dauerstrichsignals und eines frequenzmodulierten Dauerstrichsignals. Entsprechend wertet die Auswerteeinheit 10 in den verschiedenen Ausführungsbeispielen das Empfangssignal S_{RX} oder das abgeleitete Empfangssignal S'_{RX} hinsichtlich seiner Phasenlage Phi unterschiedlich aus, nämlich mittels eines Phasendetektors oder unmittelbar durch Laufzeitmessung bezüglich des als Ausgangssignal S_{TX} abgestrahlten Testsignals Sₜₑₛₜ oder bezüglich des als Ausgangssignal S_{TX} abgestrahlten abgeleiteten Testsignals S'ₜₑₛₜ.

Die Auswerteeinheit 10 der in den Fig. 2 bis 6 dargestellten Prüfvorrichtungen werten eine Mehrzahl von Empfangssignalen S_{RX} oder eine Mehrzahl von abgeleiteten Empfangssignalen S'_{RX} hinsichtlich der Phasenlage Phi und/oder hinsichtlich der Amplitude A aus und speichern eine Mehrzahl von Werten für die Phasenlage Phi und/oder die Amplitude A. Die Erfassung einer Mehrzahl an Werten für die Phasenlage Phi und/oder die Amplitude A ist sinnvoll, da üblicherweise die Position des Empfangselements 3 im Testbetrieb variiert wird. So wird die Ruhezone des im Simulationsbetrieb zu testenden Abstandssensors 2 durch ortsmäßige Variation einer oder auch zweier Ortsvariablen linear oder flächig abgerastert und vermessen; dies ist in Fig. 6 angedeutet mit dem Doppelpfeil an der Halte- und Positioniervorrichtung 8. Die Abweichungen der erfassten Phasenlagen Phi und/oder Amplituden A von Messpunkt zu Messpunkt sind ein Maß für die Ebenheit der einlaufenden Wellen in der Ruhezone. Die Abweichungen erlauben Rückschluss darüber, ob der zu überprüfende Abstandssensor-Prüfstand 6 noch den Genauigkeitsanforderungen entspricht oder nachkalibriert werden muss. Die Abweichungen können in der Prüfvorrichtung 1 selbst festgestellt werden, dies muss aber nicht der Fall sein.

Die Prüfvorrichtung 1 gemäß Fig. 5 weist eine Kommunikationsschnittstelle 15 auf, mittels der die Prüfvorrichtung 1 mit einem externen Rechner verbindbar ist, der nicht ausdrücklich dargestellt ist. Die Prüfvorrichtung 1 oder genauer die Auswerteeinheit 10 überträgt den Wert für die Phasenlage Phi und/oder die Amplitude A des Empfangssignals S_{RX} oder des abgeleiteten Empfangssignals S'_{RX} über die Kommunikationsschnittstelle 15 dann zu dem externen Rechner. Der externe Rechner kann dann die Auswertung hinsichtlich der Ebenheit der empfangenen Welle vornehmen, speziell wenn eine Mehrzahl an ermittelten Phasenlagen und/oder Amplituden übermittelt worden ist.

Die Prüfvorrichtung 1 gemäß Fig. 5 dient ferner der Übertragung von Steuerbefehlen, insbesondere von einem externen Rechner an die Prüfvorrichtung 1. So kann die Prüfvorrichtung 1 über die Kommunikationsschnittstelle insbesondere eine externe Aufforderung erhalten, die die Testsignaleinheit 9 veranlasst, das Testsignal Sₜₑₛₜ zu erzeugen, das dann - gegebenenfalls auch als abgeleitetes Testsignal S'ₜₑₛₜ - als Ausgangssignal S_{TX} über das Abstrahlelement 4 abgestrahlt wird. Synchron zur Abstrahlung des Ausgangssignals S_{TX} wertet die Auswerteeinheit 10 das Empfangssignal S_{RX} oder das abgeleitete Empfangssignal S'_{RX} hinsichtlich seiner Phasenlage Phi und/oder Amplitude A aus.

Dabei ist das Empfangssignal S_{RX} durch das ausgesendete Testsignal Sₜₑₛₜ verursacht worden.

Fig. 6 stellt nicht nur einen Abstandssensor-Prüfstand 6 mit einem gefalteten Strahlengang dar, sondern veranschaulicht auch das eingangs beschriebene Verfahren 16 zur Überprüfung dieses Abstandssensor-Prüfstandes 6. Der Abstandssensor-Prüfstand 6 weist eine Prüfvorrichtung 1 zum Test eines mit elektromagnetischen Wellen arbeitenden Abstandssensors 2, einen Strahlumlenker 7 und eine Halte- und Positioniervorrichtung 8 zur Aufnahme eines zu testenden Abstandssensors 2 in einer Halterung auf. Die Prüfvorrichtung 1 umfasst - wie zuvor beschrieben - ein Empfangselement 3, ein Abstrahlelement 4, eine Zeitverzögerungseinheit 5, eine Testsignaleinheit 9 und eine Auswerteeinheit 10, wobei das Empfangselement 3 zum Empfangen einer elektromagnetischen Freiraumwelle als Empfangssignal S_{RX} dient und wobei das Abstrahlelement 4 zur Abstrahlung eines elektromagnetischen Ausgangssignals S_{TX} dient. Im Simulationsbetrieb wird das Empfangssignal S_{RX} oder ein von dem Empfangssignal S_{RX} abgeleitetes Empfangssignal S'_{RX} bei Überprüfung des Abstandssensors 2 über die Zeitverzögerungseinheit 5 mit einer vorgebbaren Zeitverzögerung t_{delay}, ₛₒₗₗ geführt, wodurch es zu einem zeitverzögerten Signal S_{delay} als simuliertes Reflexionssignal zeitverzögert wird. Das zeitverzögerte Signal S_{delay} - oder ein von dem zeitverzögerten Signal S_{delay} abgeleitetes Signal S '_{delay} - wird zum Test des Abstandssensors (2) als Ausgangssignal (S_{TX}) über das Abstrahlelement (4) abgestrahlt.

Bei dem hier eigentlich interessierenden Testbetrieb wird mit der Testsignaleinheit 9 ein Testsignal Sₜₑₛₜ erzeugt und das Testsignal Sₜₑₛₜ oder ein von dem Testsignal Sₜₑₛₜ abgeleitetes Testsignal S'ₜₑₛₜ wird als Ausgangssignal S_{TX} über das Abstrahlelement 4 abgestrahlt. Die Auswerteeinheit 10 wertet im Testbetrieb synchron zur Abstrahlung des Testsignals Sₜₑₛₜ oder des abgeleiteten Testsignals S'ₜₑₛₜ als Ausgangssignal S_{TX} das Empfangssignal S_{RX} oder das abgeleitete Empfangssignal S'_{RX} hinsichtlich seiner Phasenlage Phi und/oder seiner Amplitude A aus. Mit der synchronen Auswertung ist gemeint, dass das Aussenden des Testsignals und die Auswertung des Empfangssignals zeitlich zusammenhängen, da das Empfangssignal üblicherweise das ausgesendete reflektierte Testsignal ist. Wenn zum Beispiel die Laufzeit eines Pulses erfasst wird, erfolgt das Aussenden und Auswerten zwar synchron, aber zeitlich geringfügig nacheinander. Wird als Testsignal ein frequenzmoduliertes Dauerstrichsignal verwendet, erfolgen das Aussenden des Signals und die Auswertung des Empfangssignals tatsächlich zeitlich überlappend, da beide Signale miteinander gemischt werden. Jedenfalls wird der dann ermittelte Wert für die Phasenlage Phi und/oder die Amplitude A gespeichert, was zwangsläufig so ist, da das Rechenergebnis in irgendeiner Form informationstechnisch in der Auswerteeinheit 10 vorliegen muss.

Die Zeitverzögerungseinheit 5, die Testsignaleinheit 9 und die Auswerteeinheit 10 sind in den gezeigten Ausführungsbeispielen, also auch in dem Ausführungsbeispiel gemäß Fig. 6, von einem Gehäuse 13 umgeben. Die Prüfvorrichtung 1 ist mit ihrem Gehäuse 13 in dem Abstandssensor-Prüfstand 6 ortsfest angeordnet. Das Empfangselement 3 ist über eine Signalleitung 14 mit dem Gehäuse 13 verbunden und ist damit entfernt vom Gehäuse 13 der Prüfvorrichtung 1 positionierbar. Dadurch ist es möglich, zur Überprüfung des Abstandssensor-Prüfstandes 6 das Empfangselement 3 der Prüfvorrichtung 1 in die Halterung der Halte- und Positioniervorrichtung 8 zu verbringen. In einer Ebene vor dem Empfangselement 3, das sich in der Halterung der Halte- und Positioniervorrichtung 8 befindet, werden mehrere Testpositionen angefahren. Dazu verfügt die Halte- und Positioniervorrichtung 8 über geeignete Stellglieder, die ein exaktes räumliches Verstellen speziell der Halterung der Halte- und Positioniervorrichtung 8 oder der Halte- und Positioniervorrichtung 8 in Gänze ermöglichen.

In mehreren Testpositionen wird jeweils mindestens ein Testbetrieb durchgeführt und es wird jeweils wenigstens eine Phasenlage Phi und/oder eine Amplitude A ermittelt und der ermittelte Wert für die Phasenlage Phi und/oder die Amplitude A wird gespeichert.

Mit dem Verfahren 16 ist es also möglich, mit nur wenigen zusätzlichen gerätetechnischen Merkmalen, die über die technischen Mittel hinausgehen, die für den Simulationsbetrieb ohnehin erforderlich sind, den Abstandssensor-Prüfstand 6 zu überprüfen, also daraufhin zu überprüfen, ob er noch so eingestellt ist, dass ebene Wellenfronten in einer Ebene vor der Einbauposition des zu testenden Abstandssensors 2 vorliegen.

### Bezugszeichen

- 1: Prüfvorrichtung
- 2: Abstandssensor
- 3: Empfangselement
- 4: Abstrahlelement
- 5: Zeitverzögerungseinheit
- 6: Abstandssensor-Prüfstand
- 7: Strahlumlenker
- 8: Halte- und Positioniervorrichtung
- 9: Testsignaleinheit
- 10: Auswerteeinheit
- 11: Eingangsmischer
- 12: Ausgangsmischer
- 13: Gehäuse
- 14: Signalleitung
- 15: Kommunikationsschnittstelle
- 16: Verfahren

- S_{RX}, S'_{RX}: Empfangssignal, abgeleitetes Empfangssignal
- S_{TX}, S'_{TX}: Ausgangssignal, abgeleitetes Ausgangssignal
- t_{delay, soll}: vorgegebene Zeitverzögerung
- S_{delay}, S'_{delay}: zeitverzögertes Signal; abgeleitetes zeitv. Signal
- Sₜₑₛₜ, S'ₜₑₛₜ: Testsignal, abgeleitetes Testsignal
- Phi: Phasenlage
- A: Amplitude

## Patentansprüche

1. Abstandssensor-Prüfstand (6) mit einem gefalteten Strahlengang mit Prüfvorrichtung (1) zum Test eines mit elektromagnetischen Wellen arbeitenden Abstandssensors (2) Simulation großer Objektabstände, wobei der Abstandssensor-Prüfstand (6) die Prüfvorrichtung (1), einen Strahlumlenker (7) und eine Halte- und Positioniervorrichtung (8) zur Aufnahme des zu testenden Abstandssensors (2) aufweist, wobei die Prüfvorrichtung (1) ein Empfangselement (3), ein Abstrahlelement (4), eine Zeitverzögerungseinheit (5), eine Testsignaleinheit (9) und eine Auswerteeinheit (10) umfasst, wobei das Empfangselement (3) zum Empfangen einer elektromagnetischen Freiraumwelle als Empfangssignal (S_{RX}) dient, und das Abstrahlelement (4) zur Abstrahlung eines elektromagnetischen Ausgangssignals (S_{TX}) dient, wobei in einem Simulationsbetrieb zum Test des Abstandssensors (2) durch Simulation eines beliebig beabstandeten Objektes in einem Erfassungsbereich des zu testenden Abstandssensors (2) das Empfangssignal (S_{RX}) oder ein von dem Empfangssignal (S_{RX}) abgeleitetes Empfangssignal (S'_{RX}) über die Zeitverzögerungseinheit (5) mit einer vorgebbaren Zeitverzögerung (t_{delay, soll}) geführt wird und so zu einem zeitverzögerten Signal (S_{delay}) als simuliertes Reflexionssignal zeitverzögert wird, wobei das zeitverzögerte Signal (S_{delay}) oder ein von dem zeitverzögerten Signal (S_{delay}) abgeleitetes zeitverzögertes Signal (S'_{delay}) als Ausgangssignal (S_{TX}) über das Abstrahlelement (4) abgestrahlt wird,
**dadurch gekennzeichnet,**
**dass** mit der Testsignaleinheit (9) in einem Testbetrieb zur Überprüfung der exakten Ausrichtung von Prüfvorrichtung (1), Strahlumlenker (7) und Halte- und Positioniervorrichtung (8) aufeinander ein Testsignal (Sₜₑₛₜ) erzeugt wird und das Testsignal (Sₜₑₛₜ) oder ein von dem Testsignal (Sₜₑₛₜ) abgeleitetes Testsignal (S'ₜₑₛₜ) als Ausgangssignal (S_{TX}) über das Abstrahlelement (4) abgestrahlt wird,
wobei die Auswerteeinheit (10) im Testbetrieb synchron zur Abstrahlung des Testsignals (Sₜₑₛₜ) oder des abgeleiteten Testsignals (S'ₜₑₛₜ) als Ausgangssignal (S_{TX}) das Empfangssignal (S_{RX}) oder das abgeleitete Empfangssignal (S'_{RX}) hinsichtlich seiner Phasenlage (Phi) und/oder Amplitude (A) auswertet und den ermittelten Wert für die Phasenlage (Phi) und/oder die Amplitude (A) speichert, wobei die Zeitverzögerungseinheit (5), die Testsignaleinheit (9) und die Auswerteeinheit (10) von einem Gehäuse (13) umgeben sind und das Empfangselement (3) über eine Signalleitung (14) mit dem Gehäuse (13) verbunden ist und damit entfernt vom Gehäuse (13) der Prüfvorrichtung (1) positionierbar ist, nämlich das Empfangselement (3) an die Montageposition des zu überprüfenden Abstandssensors (2) verbringbar ist, sodass die Ebenheit der elektromagnetischen Wellen am Testort des Abstandssensors (2) überprüft werden kann.

2. Prüfvorrichtung (1) nach Anspruch 1, **dadurch gekennzeichnet, dass** das Empfangselement (3) einen Eingangsmischer (11) aufweist und das Empfangssignal (S_{RX}), mit dem Eingangsmischer (11) in eine niedrigere Zwischenfrequenz heruntergemischt wird und das so aus dem Empfangssignal (S_{RX}) abgeleitete niederfrequente Empfangssignal (S'_{RX}) über die Signalleitung (14) zumindest zu der von dem Gehäuse (13) umgebenen Auswerteeinheit (10) übertragen wird.

3. Prüfvorrichtung (1) nach Anspruch 1 oder 2, **dadurch gekennzeichnet, dass** die Auswerteeinheit (10) die Phasenlage (Phi) des Empfangssignals (S_{RX}) oder die Phasenlage (Phi) des abgeleiteten Empfangssignals (S'_{RX}) in Bezug auf ein Referenzsignal bestimmt, insbesondere wobei das Referenzsignal das Testsignal (Sₜₑₛₜ) oder das abgeleitete Testsignal (S'ₜₑₛₜ) ist.

4. Prüfvorrichtung (1) nach einem der Ansprüche 1 bis 3, **dadurch gekennzeichnet, dass** die Auswerteeinheit (10) das Empfangssignal (S_{RX}) oder das abgeleitete Empfangssignal (S'_{RX}) hinsichtlich seiner Phasenlage (Phi) durch Laufzeitmessung bezüglich des als Ausgangssignal (S_{TX}) abgestrahlten Testsignals (Sₜₑₛₜ) oder bezüglich des als Ausgangssignal (S_{TX}) abgestrahlten abgeleiteten Testsignals (S'ₜₑₛₜ) auswertet.

5. Prüfvorrichtung (1) nach einem der Ansprüche 1 bis 4, **dadurch gekennzeichnet, dass** das Testsignal (Sₜₑₛₜ) oder das abgeleitete Testsignal (S'ₜₑₛₜ) ein Impuls, eine Impulsfolge, ein Dauerstrichsignal oder ein frequenzmoduliertes Dauerstrichsignal ist.

6. Prüfvorrichtung (1) nach einem der Ansprüche 1 bis 5, **dadurch gekennzeichnet, dass** die Auswerteeinheit (10) eine Mehrzahl von Empfangssignalen (S_{RX}) oder eine Mehrzahl von abgeleiteten Empfangssignalen (S'_{RX}) hinsichtlich der Phasenlage (Phi) und/oder hinsichtlich der Amplitude (A) auswertet und eine Mehrzahl von Werten für die Phasenlage (Phi) und/oder die Amplitude (A) speichert.

7. Prüfvorrichtung (1) nach einem der Ansprüche 1 bis 6, **dadurch gekennzeichnet, dass** über eine Kommunikationsschnittstelle (15) ein externer Rechner verbindbar ist und die Auswerteeinheit (10) den Wert für die Phasenlage (Phi) und/oder die Amplitude (A) des Empfangssignals (S_{RX}) oder des abgeleiteten Empfangssignals (S'_{RX}) über die Kommunikationsschnittstelle (15) zu dem externen Rechner überträgt.

8. Prüfvorrichtung (1) nach Anspruch 7, **dadurch gekennzeichnet, dass** die Testsignaleinheit (9) nach einer über die Kommunikationsschnittstelle erhaltenen externen Aufforderung das Testsignal (Sₜₑₛₜ) erzeugt und das Testsignal (Sₜₑₛₜ) oder ein von dem Testsignal (Sₜₑₛₜ) abgeleitetes Testsignal (S'ₜₑₛₜ) als Ausgangssignal (S_{TX}) über das Abstrahlelement (4) abstrahlt und synchron zur Abstrahlung des Ausgangssignals (S_{TX}), die Auswerteeinheit (10) das Empfangssignal (S_{RX}) oder das abgeleitete Empfangssignal (S'_{RX}) hinsichtlich seiner Phasenlage (Phi) und/oder Amplitude (A) auswertet.

9. Verfahren (16) zur Überprüfung eines Abstandssensor-Prüfstandes (6) mit einem gefalteten Strahlengang, wobei der Abstandssensor-Prüfstand (6) eine Prüfvorrichtung (1) zum Test eines mit elektromagnetischen Wellen arbeitenden Abstandssensors (2), einen Strahlumlenker (7) und eine Halte- und Positioniervorrichtung (8) zur Aufnahme eines zu testenden Abstandssensors in einer Halterung umfasst, wobei die Prüfvorrichtung (1) ein Empfangselement (3), ein Abstrahlelement (4), eine Zeitverzögerungseinheit (5), eine Testsignaleinheit (9) und eine Auswerteeinheit (10) umfasst, wobei das Empfangselement (3) zum Empfangen einer elektromagnetischen Freiraumwelle als Empfangssignal (S_{RX}) dient, wobei das Abstrahlelement (4) zur Abstrahlung eines elektromagnetischen Ausgangssignals (S_{TX}) dient, wobei in einem Simulationsbetrieb zum Test des Abstandssensors (2) durch Simulation eines beliebig beabstandeten Objektes in einem Erfassungsbereich des zu testenden Abstandssensors (2) das Empfangssignal (S_{RX}) oder ein von dem Empfangssignal (S_{RX}) abgeleitetes Empfangssignal (S'_{RX}) bei Überprüfung des Abstandssensors (2) über die Zeitverzögerungseinheit (5) mit einer vorgebbaren Zeitverzögerung (t_{delay, soll}) geführt wird und so zu einem zeitverzögerten Signal (S_{delay}) als simuliertes Reflexionssignal zeitverzögert wird, wobei das zeitverzögerte Signal (S_{delay}) oder ein von dem zeitverzögerten Signal (S_{delay}) abgeleitetes Signal (S'_{delay}) zum Test des Abstandssensors (2) als Ausgangssignal (S_{TX}) über das Abstrahlelement (4) abgestrahlt wird, **dadurch gekennzeichnet, dass** mit der Testsignaleinheit (9) im Testbetrieb zur Überprüfung der exakten Ausrichtung von Prüfvorrichtung (1), Strahlumlenker (7) und Halte- und Positioniervorrichtung (8) aufeinander ein Testsignal (Sₜₑₛₜ) erzeugt wird und das Testsignal (Sₜₑₛₜ) oder ein von dem Testsignal (Sₜₑₛₜ) abgeleitetes Testsignal (S'ₜₑₛₜ) als Ausgangssignal (S_{TX}) über das Abstrahlelement (4) abgestrahlt wird, wobei die Auswerteeinheit (10) im Testbetrieb synchron zur Abstrahlung des Testsignals (Sₜₑₛₜ) oder des abgeleiteten Testsignals (S'ₜₑₛₜ) als Ausgangssignal (S_{TX}) das Empfangssignal (S_{RX}) oder das abgeleitete Empfangssignal (S'_{RX}) hinsichtlich seiner Phasenlage (Phi) und/oder seiner Amplitude (A) auswertet und den ermittelten Wert für die Phasenlage (Phi) und/oder die Amplitude (A) speichert, und wobei die Zeitverzögerungseinheit (5), die Testsignaleinheit (9) und die Auswerteeinheit (10) von einem Gehäuse (13) umgeben sind, wobei das Gehäuse (13) in dem Abstandssensor-Prüfstand (6) ortsfest angeordnet ist, und das Empfangselement (3) über eine Signalleitung (14) mit dem Gehäuse (13) verbunden ist und damit entfernt vom Gehäuse (13) der Prüfvorrichtung positionierbar ist, nämlich das Empfangselement (3) an die Montageposition des zu überprüfenden Abstandssensors (2) verbringbar ist, sodass die Ebenheit der elektromagnetischen Wellen am Testort des Abstandssensors (2) überprüft werden kann,
wobei zur Überprüfung des Abstandssensor-Prüfstandes (6) das Empfangselement (3) der Prüfvorrichtung (1) in die Halterung der Halte- und Positioniervorrichtung (8) verbracht wird,
wobei in einer Ebene vor dem Empfangselement (3) in der Halterung der Halte- und Positioniervorrichtung (8) mehrere Testpositionen angefahren werden,
wobei in mehreren Testpositionen jeweils mindestens ein Testbetrieb durchgeführt und wenigstens eine Phasenlage (Phi) und/oder eine Amplitude (A) ermittelt und der ermittelte Wert für die Phasenlage (Phi) und/oder die Amplitude gespeichert wird.

## Claims

1. A distance sensor test stand (6) having a folded beam path and comprising a test device (1) for testing a distance sensor (2) operating with electromagnetic waves by simulating large object distances, the distance sensor test stand (6) comprising the test device (1), a beam deflector (7), and a holding and positioning device (8) for receiving the distance sensor (2) to be tested, the test device (1) comprising a receiving element (3), an emitting element (4), a time delay unit (5), a test signal unit (9), and an evaluation unit (10), the receiving element (3) serving to receive an electromagnetic free wave as a received signal (S_{RX}), and the emitting element (4) serving to emit an electromagnetic output signal (S_{TX}), the received signal (S_{RX}) or a received signal (S'_{RX}) derived from the received signal (S_{RX}) being routed via the time delay unit (5) with a specifiable time delay (t_{delay,soll}) in a simulation mode for testing the distance sensor (2) by simulating an arbitrarily spaced object in a detection range of the distance sensor (2) to be tested, and thus being time-delayed to form a time-delayed signal (S_{delay}) as a simulated reflection signal, the time-delayed signal (S_{delay}) or a time-delayed signal (S'_{delay}) derived from the time-delayed signal (S_{delay}) being emitted as an output signal (S_{TX}) by means of the emitting element (4),
**characterized in that**
a test signal (Sₜₑₛₜ) is generated by means of the test signal unit (9) in a test mode for checking the exact alignment of the test device (1), beam deflector (7), and holding and positioning device (8) with respect to one another and the test signal (Sₜₑₛₜ) or a test signal (S'ₜₑₛₜ) derived from the test signal (Sₜₑₛₜ) is emitted as an output signal (S_{TX}) by means of the emitting element (4),
wherein the evaluation unit (10) in test mode evaluates the received signal (S_{RX}) or the derived received signal (S'_{RX}) with respect to the phase position (Phi) and/or amplitude (A) thereof synchronously with the emission of the test signal (Sₜₑₛₜ) or the derived test signal (S'ₜₑₛₜ) as an output signal (S_{TX}) and stores the determined value for the phase position (Phi) and/or the amplitude (A), wherein the time delay unit (5), the test signal unit (9), and the evaluation unit (10) are enclosed by a housing (13) and the receiving element (3) is connected to the housing (13) via a signal line (14) and thus can be positioned remote from the housing (13) of the test device (1), that is, the receiving element (3) can be displaced to the mounting position of the distance sensor (2) to be tested, so that the planarity of the electromagnetic waves can be checked at the test location of the distance sensor (2).

2. The test device (1) according to claim 1, **characterized in that** the receiving element (3) has an input mixer (11) and the received signal (S_{RX}) is mixed down to a lower intermediate frequency by means of the input mixer (11) and the low-frequency received signal (S'_{RX}) thus derived from the received signal (S_{RX}) is transmitted via the signal line (14) at least to the evaluation unit (10) enclosed by the housing (13).

3. The test device (1) according to claim 1 or 2, **characterized in that** the evaluation unit (10) determines the phase position (Phi) of the received signal (S_{RX}) or the phase position (Phi) of the derived received signal (S'_{RX}) with respect to a reference signal, in particular wherein the reference signal is the test signal (Sₜₑₛₜ) or the derived test signal (S'test).

4. The test device (1) according to any one of claims 1 to 3, **characterized in that** the evaluation unit (10) evaluates the received signal (S_{RX}) or the derived received signal (S'_{RX}) with respect to the phase position (Phi) thereof by transit time measurement with respect to the test signal (Sₜₑₛₜ) emitted as an output signal (S_{TX}) or with respect to the derived test signal (S'ₜₑₛₜ) emitted as an output signal (S_{TX}).

5. The test device (1) according to any one of claims 1 to 4, **characterized in that** the test signal (Sₜₑₛₜ) or the derived test signal (S'ₜₑₛₜ) is a pulse, a pulse train, a continuous wave signal, or a frequency-modulated continuous wave signal.

6. The test device (1) according to any one of claims 1 to 5, **characterized in that** the evaluation unit (10) evaluates a plurality of received signals (S_{RX}) or a plurality of derived received signals (S'_{RX}) with respect to the phase position (Phi) and/or with respect to the amplitude (A) and stores a plurality of values for the phase position (Phi) and/or the amplitude (A).

7. The test device (1) according to any one of claims 1 to 6, **characterized in that** an external computer can be connected by means of a communication interface (15) and the evaluation unit (10) transmits the value for the phase position (Phi) and/or the amplitude (A) of the received signal (S_{RX}) or the derived received signal (S'_{RX}) to the external computer by means of the communication interface (15).

8. The test device (1) according to claim 7, **characterized in that** the test signal unit (9) generates the test signal (Sₜₑₛₜ) after an external request received by means of the communication interface and emits the test signal (Sₜₑₛₜ) or a test signal (S'ₜₑₛₜ) derived from the test signal (Sₜₑₛₜ) as an output signal (S_{TX}) by means of the emitting element (4) and synchronously with the emitting of the output signal (S_{TX}), the evaluation unit (10) evaluates the received signal (S_{RX}) or the derived received signal (S'_{RX}) with respect to the phase position (Phi) and/or amplitude (A) thereof.

9. A method (16) for testing a distance sensor test stand (6) having a folded beam path, the distance sensor test stand (6) comprising a test device (1) for testing a distance sensor (2) operating with electromagnetic waves, a beam deflector (7), and a holding and positioning device (8) for holding a distance sensor to be tested in a holder, the test device (1) comprising a receiving element (3), an emitting element (4), a time delay unit (5), a test signal unit (9), and an evaluation unit (10), the receiving element (3) serving to receive an electromagnetic free-space wave as a received signal (S_{RX}), the emitting element (4) serving to emit an electromagnetic output signal (S_{TX}), the received signal (S_{RX}) or a received signal (S'_{RX}) derived from the received signal (S_{RX}) being routed via the time delay unit (5) with a specifiable time delay (t_{delay,soll}) when evaluating the distance sensor (2) in a simulation mode for testing the distance sensor (2) by simulating an object at any distance in a detection range of the distance sensor (2) to be tested, and thus being time-delayed to form a time-delayed signal (S_{delay}) as a simulated reflection signal, the time-delayed signal (S_{delay}) or a signal (S'_{delay}) derived from the time-delayed signal (S_{delay}) being emitted as an output signal (S_{TX}) by means of the emitting element (4) for testing the distance sensor (2), **characterized in that** a test signal (Sₜₑₛₜ) is generated by means of the test signal unit (9) in test mode for checking the exact alignment of the test device (1), beam deflector (7), and holding and positioning device (8) with respect to one another, and the test signal (Sₜₑₛₜ) or a test signal (S'ₜₑₛₜ) derived from the test signal (Sₜₑₛₜ) is emitted as an output signal (S_{TX}) by means of the emitting element (4), wherein the evaluation unit (10) evaluates the received signal (S_{RX}) or the derived received signal (S'_{RX}) with respect to the phase position (Phi) and/or amplitude (A) thereof in test mode synchronously with the emission of the test signal (Sₜₑₛₜ) or the derived test signal (S'ₜₑₛₜ) as an output signal (S_{TX}) and stores the determined value for the phase position (Phi) and/or the amplitude (A), and the time delay unit (5), the test signal unit (9) and the evaluation unit (10) being enclosed by a housing (13), wherein the housing (13) is disposed in a stationary manner in the distance sensor test stand (6), and the receiving element (3) is connected to the housing (13) by means of a signal line (14) and can thus be positioned remotely from the housing (13) of the test device, that is, the receiving element (3) can be displaced to the mounting position of the distance sensor (2) to be tested, so that the planarity of the electromagnetic waves can be checked at the test location of the distance sensor (2),
wherein the receiving element (3) of the test device (1) is displaced into the holder of the holding and positioning device (8) in order to check the distance sensor test stand (6),
wherein a plurality of test positions are reached in a plane in front of the receiving element (3) in the holder of the holding and positioning device (8),
wherein at least one test operation is carried out in each of a plurality of test positions and at least one phase position (Phi) and/or one amplitude (A) is determined and the determined value for the phase position (Phi) and/or the amplitude is stored.

## Revendications

1. Banc d'essai (6) de capteur de distance comprenant un trajet optique replié avec dispositif d'essai (1) pour tester un capteur de distance (2) fonctionnant avec des ondes électromagnétiques par simulation de grandes distances d'objet, le banc d'essai (6) de capteur de distance comprenant le dispositif d'essai (1), un déviateur de faisceau (7) et un dispositif de maintien et de positionnement (8) destiné à accueillir le capteur de distance (2) à tester, le dispositif d'essai (1) comprenant un élément de réception (3), un élément rayonnant (4), une unité de temporisation (5), une unité de signal d'essai (9) et une unité d'évaluation (10), l'élément de réception (3) servant à recevoir une onde électromagnétique en espace libre comme signal de réception (S_{RX}), et l'élément rayonnant (4) servant à rayonner un signal de sortie électromagnétique (S_{TX}), dans un mode de simulation destiné à tester le capteur de distance (2) par simulation d'un objet espacé de manière quelconque dans une zone de détection du capteur de distance (2) à tester, le signal de réception (S_{RX}) ou un signal de réception (S'_{RX}) dérivé du signal de réception (S_{RX}) étant acheminé par l'intermédiaire de l'unité de temporisation (5) avec une temporisation (t_{delay, soll}) pouvant être prédéfinie, et étant ainsi temporisé pour former un signal temporisé (S_{delay}) en tant que signal de réflexion simulé, le signal temporisé (S_{delay}) ou un signal temporisé (S'_{delay}) dérivé du signal temporisé (S_{delay}) étant rayonné en tant que signal de sortie (S_{TX}) par l'intermédiaire de l'élément rayonnant (4),
**caractérisé en ce que**
un signal d'essai (Sₜₑₛₜ) est généré avec l'unité de signal d'essai (9) dans un mode d'essai afin de vérifier l'alignement exact, les uns par rapport aux autres, du dispositif d'essai (1), du déviateur de faisceau (7) et du dispositif de maintien et de positionnement (8), et le signal d'essai (Sₜₑₛₜ) ou un signal d'essai (S'ₜₑₛₜ) dérivé du signal d'essai (Sₜₑₛₜ) est rayonné en tant que signal de sortie (S_{TX}) par l'intermédiaire de l'élément rayonnant (4),
l'unité d'évaluation (10) évaluant, en mode d'essai, de manière synchrone avec le rayonnement du signal d'essai (Sₜₑₛₜ) ou du signal d'essai dérivé (S'ₜₑₛₜ) en tant que signal de sortie (S_{TX}), le signal de réception (S_{RX}) ou le signal de réception dérivé (S'_{RX}) en ce qui concerne sa relation de phase (Phi) et/ou son amplitude (A) et mémorisant la valeur déterminée pour la relation de phase (Phi) et/ou l'amplitude (A), l'unité de temporisation (5), l'unité de signal d'essai (9) et l'unité d'évaluation (10) étant entourées par un boîtier (13) et l'élément de réception (3) étant relié au boîtier (13) par le biais d'une ligne de signal (14) et pouvant ainsi être positionné à distance du boîtier (13) du dispositif d'essai (1), à savoir que l'élément de réception (3) peut être amené à la position de montage du capteur de distance (2) à soumettre à essai, de sorte que la planéité des ondes électromagnétiques peut être vérifiée au lieu du test du capteur de distance (2).

2. Dispositif d'essai (1) selon la revendication 1, **caractérisé en ce que** l'élément de réception (3) comporte un mélangeur d'entrée (11) et le signal de réception (S_{RX}) est abaissé par mélange, par le mélangeur d'entrée (11), à une fréquence intermédiaire plus basse et le signal de réception (S'_{RX}) à basse fréquence ainsi dérivé du signal de réception (S_{RX}) est transmis par l'intermédiaire de la ligne de signal (14) au moins à l'unité d'évaluation (10) entourée par le boîtier (13).

3. Dispositif d'essai (1) selon la revendication 1 ou 2, **caractérisé en ce que** l'unité d'évaluation (10) détermine la relation de phase (Phi) du signal de réception (S_{RX}) ou la relation de phase (Phi) du signal de réception dérivé (S'_{RX}) par rapport à un signal de référence, le signal de référence étant en particulier le signal d'essai (Sₜₑₛₜ) ou le signal d'essai dérivé (S'ₜₑₛₜ).

4. Dispositif d'essai (1) selon l'une quelconque des revendications 1 à 3, **caractérisé en ce que** l'unité d'évaluation (10) évalue le signal de réception (S_{RX}) ou le signal de réception dérivé (S'_{RX}) en ce qui concerne sa relation de phase (Phi) par mesure du temps de propagation par rapport au signal d'essai (Sₜₑₛₜ) rayonné en tant que signal de sortie (S_{TX}) ou par rapport au signal d'essai dérivé (S'ₜₑₛₜ) rayonné en tant que signal de sortie (S_{TX}).

5. Dispositif d'essai (1) selon l'une quelconque des revendications 1 à 4, **caractérisé en ce que** le signal d'essai (Sₜₑₛₜ) ou le signal d'essai dérivé (S'ₜₑₛₜ) est une impulsion, un train d'impulsions, un signal à onde continu ou un signal à onde continu modulé en fréquence.

6. Dispositif d'essai (1) selon l'une quelconque des revendications 1 à 5, **caractérisé en ce que** l'unité d'évaluation (10) évalue une pluralité de signaux de réception (S_{RX}) ou une pluralité de signaux de réception dérivés (S'_{RX}) en ce qui concerne la relation de phase (Phi) et/ou en ce qui concerne l'amplitude (A) et mémorise une pluralité de valeurs pour la relation de phase (Phi) et/ou l'amplitude (A).

7. Dispositif d'essai (1) selon l'une quelconque des revendications 1 à 6, **caractérisé en ce qu'**un ordinateur externe peut être connecté par le biais d'une interface de communication (15) et l'unité d'évaluation (10) transmet la valeur pour la relation de phase (Phi) et/ou l'amplitude (A) du signal de réception (S_{RX}) ou du signal de réception dérivé (S'_{RX}) à l'ordinateur externe par le biais de l'interface de communication (15).

8. Dispositif d'essai (1) selon la revendication 7, **caractérisé en ce que** l'unité de signal d'essai (9) génère le signal d'essai (Sₜₑₛₜ) après une demande externe reçue par le biais de l'interface de communication et rayonne en tant que signal de sortie (S_{TX}), par le biais de l'élément rayonnant (4), le signal d'essai (Sₜₑₛₜ) ou un signal d'essai (S'ₜₑₛₜ) dérivé du signal d'essai (Sₜₑₛₜ) et, de manière synchrone avec le rayonnement du signal de sortie (S_{TX}), l'unité d'évaluation (10) évalue le signal de réception (S_{RX}) ou le signal de réception dérivé (S'_{RX}) en ce qui concerne sa relation de phase (Phi) et/ou son amplitude (A).

9. Procédé (16) de contrôle d'un banc d'essai (6) de capteur de distance comportant un trajet optique replié, le banc d'essai (6) de capteur de distance comprenant un dispositif d'essai (1) pour tester un capteur de distance (2) fonctionnant avec des ondes électromagnétiques, un déviateur de faisceau (7) et un dispositif de maintien et de positionnement (8) destiné à accueillir un capteur de distance à tester dans un support, le dispositif d'essai (1) comprenant un élément de réception (3), un élément de rayonnement (4), une unité de temporisation (5), une unité de signal d'essai (9) et une unité d'évaluation (10), l'élément de réception (3) servant à recevoir une onde électromagnétique en espace libre comme signal de réception (S_{RX}), l'élément rayonnant (4) servant à rayonner un signal de sortie électromagnétique (S_{TX}), dans un mode de simulation destiné à tester le capteur de distance (2) par simulation d'un objet espacé de manière quelconque dans une zone de détection du capteur de distance (2) à tester, le signal de réception (S_{RX}) ou un signal de réception (S'_{RX}) dérivé du signal de réception (S_{RX}), lors du contrôle du capteur de distance (2), étant acheminé par l'intermédiaire de l'unité de temporisation (5) avec une temporisation (t_{delay, soll}) pouvant être prédéfinie et étant ainsi temporisé pour former un signal temporisé (S_{delay}) en tant que signal de réflexion simulé, le signal temporisé (S_{delay}) ou un signal (S'_{delay}) dérivé du signal temporisé (S_{delay}) étant rayonné en tant que signal de sortie (S_{TX}) par l'intermédiaire de l'élément de rayonnement (4) pour tester le capteur de distance (2), **caractérisé en ce qu'**un signal d'essai (Sₜₑₛₜ) est généré avec l'unité de signal d'essai (9) en mode d'essai afin de vérifier l'alignement exact, les uns par rapport aux autres, du dispositif d'essai (1), du déviateur de faisceau (7) et du dispositif de maintien et de positionnement (8), et le signal d'essai (Sₜₑₛₜ) ou un signal d'essai (S'ₜₑₛₜ) dérivé du signal d'essai (Sₜₑₛₜ) est rayonné en tant que signal de sortie (S_{TX}) par l'intermédiaire de l'élément rayonnant (4), l'unité d'évaluation (10) évaluant, en mode d'essai, de manière synchrone avec le rayonnement du signal d'essai (Sₜₑₛₜ) ou du signal d'essai dérivé (S'ₜₑₛₜ) en tant que signal de sortie (S_{TX}), le signal de réception (S_{RX}) ou le signal de réception dérivé (S'_{RX}) en ce qui concerne sa relation de phase (Phi) et/ou son amplitude (A) et mémorisant la valeur déterminée pour la relation de phase (Phi) et/ou l'amplitude (A), et l'unité de temporisation (5), l'unité de signal d'essai (9) et l'unité d'évaluation (10) étant entourées par un boîtier (13), le boîtier (13) étant disposé de manière stationnaire dans le banc d'essai (6) de capteur de distance, et l'élément de réception (3) étant relié au boîtier (13) par le biais d'une ligne de signal (14) et pouvant ainsi être positionné à distance du boîtier (13) du dispositif d'essai, à savoir que l'élément de réception (3) peut être amené à la position de montage du capteur de distance (2) à soumettre à essai, de sorte que la planéité des ondes électromagnétiques peut être vérifiée au lieu d'essai du capteur de distance (2),
l'élément de réception (3) du dispositif d'essai (1) étant déplacé dans le support du dispositif de maintien et de positionnement (8) pour le contrôle du banc d'essai (6) de capteur de distance,
plusieurs positions d'essai étant desservies dans un plan devant l'élément de réception (3) dans le support du dispositif de maintien et de positionnement (8),
au moins un mode d'essai étant à chaque fois effectué dans plusieurs positions d'essai et au moins une relation de phase (Phi) et/ou une amplitude (A) étant déterminée(s) et la valeur déterminée pour la relation de phase (Phi) et/ou l'amplitude étant mémorisée.
